# EUROPÄISCHE PATENTANMELDUNG

(11) **EP 4 640 372 A1**
(43) Veröffentlichungstag der Anmeldung: **29.10.2025**
(21) Anmeldenummer: 25171052.1
(22) Anmeldetag: 16.04.2025
(51) Int. Cl.: B24C 1/00, B24C 5/04, B24C 7/00, B24C 9/00, C01B 32/55

(54) **REINIGUNGSANLAGE UND VERFAHREN ZUM REINIGEN EINER OBERFLÄCHE MITTELS EINES CO2-SCHNEE-STRAHLS**

(30) Priorität: 23.04.2024 DE 102024111394
(71) Anmelder: ACP Systems AG, 78658 Zimmern ob Rottweil (DE)
(72) Erfinder: Illg, Jonas, 71254 Ditzingen (DE); Menauer, Karl-Heinz, 71665 Vaihingen (DE)
(74) Vertreter: DREISS Patentanwälte PartG mbB

(57) **Zusammenfassung**

Die Erfindung betrifft eine Reinigungsanlage zur Reinigung von Oberflächen mittels eines CO₂-Schnee-Strahls (14), umfassend eine Reinigungskammer (16) mit einem Abgasauslass (52) zum Auslass eines Abgasstroms (54), wenigstens eine in der Reinigungskammer (16) angeordnete CO₂-Schnee-Strahldüse (22) zum Erzeugen eines CO₂-Schnee-Strahls aus flüssigem CO₂ und Beschleunigungsgas (50), eine CO₂-Zuführeinrichtung (24) zum Zuführen von flüssigem CO₂ zu der CO₂-Schnee-Strahldüse, eine Beschleunigungsgas-Zuführeinrichtung (26) zum Zuführen von Beschleunigungsgas zu der CO2-Schnee-Strahldüse, und eine Abgas-Aufbereitungseinrichtung (56), welche dazu eingerichtet ist, im Abgasstrom enthaltenes CO₂ zumindest teilweise aus dem Abgasstrom zu entfernen und - zur Wiederverwendung in der CO₂-Schnee-Strahldüse - der CO₂-Zuführeinrichtung zuzuführen und einen durch das Entfernen des CO₂ erhaltenen CO₂-reduzierten Restabgasstrom (60) - zur Wiederverwendung als Beschleunigungsgas (50) in der CO₂-Schnee-Strahldüse - der Beschleunigungsgas-Zuführeinrichtung verdichtet zuzuführen. Die Erfindung betrifft auch ein Verfahren zum Reinigen einer Oberfläche mittels eines CO₂-Schnee-Strahls.

## Beschreibung

Die Erfindung betrifft eine Reinigungsanlage zur Reinigung von Oberflächen mittels eines CO₂-Schnee-Strahls sowie ein Verfahren zur Reinigung von Oberflächen mittels eines CO₂-Schnee-Strahls.

Derartige Reinigungsanlagen haben sich in der Praxis zur schonenden Reinigung von Oberflächen, bspw. von Werkstückoberflächen, vor Lackier- oder Beschichtungsprozessen oder von Funktionsoberflächen in der Halbleiterindustrie und in der Medizintechnik bewährt. Insbesondere ermöglicht eine Oberflächenreinigung mittels eines CO₂-Schnee-Strahls (sog. "CO₂-Schneestrahlen") eine trockene (wasserfreie), lösemittelfreie und rückstandsfreie Entfernung filmischer und/oder partikulärer Verunreinigungen (bspw. Staub, Ablationsrückstände, Reste von Schneidemulsionen, Fingerabdrücke, etc.).

Die Reinigungswirkung eines CO₂-Schnee-Strahls beim Auftreffen auf eine Oberfläche beruht im Wesentlichen auf vier Wirkmechanismen: 1. Verspröden von Verunreinigungen durch schnelles Abkühlen (Sublimationspunkt von CO₂-Schnee bei Atmosphärendruck: -78,5 °C); 2. Abrasion durch Impulsübertrag (beschleunigte CO₂-Schneekristalle übertragen Druck- und Scherkräfte beim Auftreffen auf die Oberfläche); 3. Chemische Lösung von Verunreinigungen, bspw. von Adsorptionsverbindungen (im Zuge des Aufpralls von CO₂-Schneekristallen auf eine Oberfläche kann CO₂ in einen flüssigen Zustand überführt werden; in diesem Zustand ist CO₂ ein gutes chemisches Lösemittel); 4. Wegschleudern von Verunreinigungen durch (ca. 500-fache) Volumenzunahme bei der Sublimation von CO₂ aus der festen Phase in die Gasphase.

CO₂-Schneestrahlen ist von dem regelmäßig stärker abrasiv wirkenden CO₂-Trockeneisstrahlen zu unterscheiden, bei dem Trockeneispellets (Pellets aus festem CO₂, also insbesondere keine CO₂-Schneekristalle) in einer Strahlanlage beschleunigt und auf ein zu reinigendes Werkstück gestrahlt werden. Während Trockeneispellets üblicherweise in einem separat von der Strahlanlage bereitgestellten Pelletierer hergestellt werden und dann batchweise der Strahlanlage zugeführt werden, ermöglicht CO₂-Schneestrahlen einen kontinuierlichen Betrieb und eignet sich daher insbesondere zur Automatisierung.

Zum Erzeugen eines CO₂-Schnee-Strahls wird flüssiges CO₂ (Kohlendioxid) üblicherweise bei einem Ausgangsdruck von üblicherweise in etwa 60 bar oder, bei Versorgung aus Niederdrucktanks, in etwa 20 bar einem Expansionsbereich einer CO₂-Schnee-Strahldüse zugeführt, in welchem das flüssige CO₂ entspannt. Mit abfallendem Druck vom Ausgangsdruck bis auf Umgebungsdruck (üblicherweise 1 bar) findet eine schrittweise Phasenumwandlung von flüssigem CO₂ in gasförmiges CO₂ bei gleichzeitiger Abkühlung des Gemisches statt. Bei Unterschreitung des Drucks am Tripelpunkt von CO₂ (5,185 bar) wandelt sich die verbleibende flüssige Phase zumindest teilweise in festes CO₂ in Form von Schneekristallen, sog. CO₂-Schnee, um. Bei CO₂-"Schnee" handelt es sich also um CO₂ in einem festen Aggregatzustand und insbesondere nicht um "Schnee" im Sinne von gefrorenem Wasser. Die entstehenden CO₂-Schneekristalle werden durch das in Folge der Entspannung beschleunigte CO₂-Gas mitgerissen bilden somit gemeinsam mit dem CO₂-Gas ein CO₂-Gas/CO₂-Schnee Gemisch.

Dieses CO₂-Gas/CO₂-Schnee Gemisch kann grundsätzlich bereits zum Abreinigen einer Oberfläche verwendet werden. Vorzugsweise wird das CO₂-Gas/CO₂-Schnee Gemisch aber zusätzlich von einem Beschleunigungsgasstrom, vorzugsweise in Form eines Mantelstrahls aus dem Beschleunigungsgas, bspw. Druckluft oder Stickstoff, gebündelt und weiter zu einem CO₂-Schnee-Strahl beschleunigt.

Ein Strahlwerkzeug zum Erzeugen und Ausgeben eines solchen CO₂-Schnee-Strahls aus CO₂-Schnee und Beschleunigungsgas ist beispielsweise aus der WO 00/74897 A1 und der DE 10 2019 108 289 A1 bekannt.

Aus Umweltschutzgründen ist es bei solchen CO₂-Schnee-Reinigungsanlagen wünschenswert, ein Freisetzen des entstandenen CO₂s in die Atmosphäre zu verhindern. Zu diesem Zweck ist es bspw. aus der Trockeneisherstellung bekannt, das entstehende CO₂ möglichst vollständig aufzufangen und gegebenenfalls wiederzuverwenden.

Die Erfindung beschäftigt sich mit der Aufgabe, Wirtschaftlichkeit, Umweltfreundlichkeit und Energieeffizienz beim CO₂-Schnee-Strahlen zu verbessern.

Diese Aufgabe wird erfindungsgemäß durch eine Reinigungsanlage mit den Merkmalen des Anspruchs 1 gelöst. Die Reinigungsanlage ist zum Reinigen von Oberflächen mittels eines CO₂-Schnee-Strahls ausgebildet. Der CO₂-Schnee-Strahl umfasst, insbesondere besteht aus, CO₂-Schnee und Beschleunigungsgas. Das Beschleunigungsgas umfasst insbesondere Druckluft und gasförmiges CO₂.

Die Reinigungsanlage umfasst eine, insbesondere im Wesentlichen gasdichte, Reinigungskammer zur Aufnahme eines zu reinigenden Gegenstands. Die Reinigungskammer kann beispielsweise einen Träger für den zu reinigenden Gegenstand und eine, insbesondere gasdichte, Umhausung für den Träger aufweisen. Die Reinigungskammer kann insbesondere eine verschließbare Öffnung zum Beschicken der Reinigungskammer aufweisen. Die Reinigungskammer weist einen Abgasauslass zum Auslass eines Abgasstroms auf. Der Abgasstrom umfasst insbesondere ein Gemisch aus CO₂ (aus verflüchtigtem CO₂-Schnee), Beschleunigungsgas, optional Spülgas, und optional abgereinigten Partikeln, auf. Die Reinigungsanlage kann eine Absaugeinrichtung zum Absaugen des Abgasstroms aus der Reinigungskammer aufweisen. Die Reinigungskammer kann auch einen Spülgaseinlass zum Einlass eines Spülgasstroms aufweisen.

Die Reinigungsanlage umfasst außerdem wenigstens eine in der Reinigungskammer angeordnete CO₂-Schnee-Strahldüse zum Erzeugen eines CO₂-Schnee-Strahls ausgehend von flüssigem CO₂ und Beschleunigungsgas. Die CO₂-Schnee-Strahldüse kann insofern einen CO₂-Anschluss für flüssiges CO₂ und einen Beschleunigungsgas-Anschluss für ein Beschleunigungsgas aufweisen. Wie vorstehend erläutert, handelt es sich bei dem CO₂-Schnee-Strahl um einen Strahl aus einem Gemisch umfassend Beschleunigungsgas, CO₂-Schnee, und optional CO₂-Gas.

Die Reinigungsanlage umfasst außerdem eine CO₂-Zuführeinrichtung zum Zuführen von flüssigem CO₂ zu der CO₂-Schnee-Strahldüse, insbesondere zu dem CO₂-Anschluss, vorzugsweise bei einem Betriebsdruck von 20-120 bar, weiter vorzugsweise 60 bar. Die CO₂-Zuführeinrichtung kann Fluidleitungen und/oder CO₂-Zwischenspeicher umfassen.

Die Reinigungsanlage umfasst außerdem eine Beschleunigungsgas-Zuführeinrichtung zum Zuführen von komprimiertem Beschleunigungsgas zu der CO₂-Schnee-Strahldüse, insbesondere zu dem Beschleunigungsgas-Anschluss. Vorzugsweise weist das Beschleunigungsgas einen Druck zwischen 1 und 25 bar, vorzugsweise zwischen 1 und 16 bar, weiter vorzugsweise zwischen 2 und 12 bar, weiter vorzugsweise zwischen 3 und 8 bar, auf. Die Beschleunigungsgas-Zuführeinrichtung kann Fluidleitungen und/oder Beschleunigungsgas-Zwischenspeicher umfassen. Bei dem Beschleunigungsgas kann es sich insbesondere um ein Gemisch aus Luft und CO₂-Gas handeln. Wie nachfolgend noch im Detail erläutert, kann das Beschleunigungsgas Umgebungsluft (bspw. welche beim Beschicken der Reinigungskammer in diese eintritt) und recyceltes CO₂-Gas umfassen. Das Beschleunigungsgas kann auch Stickstoff und CO₂-Gas umfassen.

Erfindungsgemäß umfasst die Reinigungsanlage außerdem eine Abgas-Aufbereitungseinrichtung zur Aufbereitung des aus dem Abgasauslass der Reinigungskammer ausgegebenen Gasgemisches (Abgasstrom). Die Abgas-Aufbereitungseinrichtung ist dazu eingerichtet, im Abgasstrom enthaltenes CO₂ (insbesondere erhalten aus verflüchtigtem CO₂-Schnee, als Bestandteil des Beschleunigungsgases und/oder als Bestandteil von beim Beschicken der Reinigungskammer in die Reinigungskammer eintretender Luft) zumindest teilweise, insbesondere nur teilweise, aus dem Abgasstrom zu entfernen und - zur Wiederverwendung in der CO₂-Schnee-Strahldüse, insbesondere zur Erzeugung von CO₂-Schnee - der CO₂-Zuführeinrichtung (und dann der CO₂-Schnee-Strahldüse) zuzuführen. Mit Entfernen ist vorliegend insbesondere ein Abtrennen zumindest eines Teils des CO₂ aus dem Abgasstrom gemeint. Insbesondere ist die Abgas-Aufbereitungseinrichtung dazu eingerichtet, im Abgasstrom enthaltenes CO₂ zu verflüssigen und als Flüssig-CO₂ der CO₂-Zuführeinrichtung zuzuführen. Die Abgas-Aufbereitungseinrichtung ist außerdem dazu eingerichtet, einen durch das Entfernen, insbesondere Abtrennen, des CO₂s aus dem Abgasstrom erhaltenen (um CO₂ reduzierten) Restabgasstrom - zur Wiederverwendung als Beschleunigungsgas in der CO2-Schnee-Strahldüse - der Beschleunigungsgas-Zuführeinrichtung (und dann der CO₂-Schnee-Strahldüse) komprimiert zuzuführen. Vorzugsweise ist die Abgas-Aufbereitungseinrichtung dazu ausgebildet, den Abgasstrom in einen Flüssig-CO₂-Strom aus flüssigem CO₂ und einen Restabgasstrom aus komprimiertem und an CO₂ reduziertem Abgasstrom zu trennen, den Flüssig-CO₂-Strom der CO₂-Zuführeinrichtung zuzuführen und den Restabgasstrom der Beschleunigungsgas-Zuführeinrichtung zuzuführen.

Bei der vorgeschlagenen Reinigungsanlage werden insofern sowohl CO₂ als auch Beschleunigungsgas wiederverwendet und insbesondere in einem geschlossenen Medienkreislauf geführt. Auf diese Weise ist eine energie- und ressourceneffiziente Reinigung mittels CO₂-Schnee-Strahlen ermöglicht, die über ein reines Entfernen des CO₂ hinausgeht. Insbesondere kann durch die vorgeschlagene Rückführung und Wiederverwendung des Beschleunigungsgases ein Anwendungsbereich des CO₂-Schnee-Strahlens erweitert werden. Beispielsweise eignet sich die vorgeschlagene Reinigungsanlage durch den geschlossenen Medienkreislauf insbesondere auch für einen Einsatz in Reinraumumgebungen, da ein im Stand der Technik üblicher Abgasstrom in die Umgebung reduziert wird oder komplett wegfallen kann, was aufwändige und energieintensive Klimatisierungs- und Filterprozesse der die Abluft ersetzenden Zuluft reduziert.

Im vorliegenden Zusammenhang beschreibt "Abgasstrom" den aus dem Abgasauslass der Reinigungskammer (zur Weiterverarbeitung in der Abgas-Aufbereitungseinrichtung) austretenden Gasstrom. Mit "Abgas" ist insofern insbesondere nicht ein Gasgemisch gemeint, das wie im Stand der Technik üblich in die Atmosphäre abgeführt wird. Der Abgasstrom umfasst insbesondere CO₂, Beschleunigungsgas und, optional, abgereinigte Partikel. Der Abgasstrom kann auch Umgebungsluft umfassen, welche beispielsweise bei einem Beschicken der Reinigungskammer in die Reinigungskammer eindringt. Aus diesem Abgasstrom wird durch die Abgas-Aufbereitungseinrichtung CO₂ abgetrennt, wobei der verbleibende um CO₂ reduzierte Abgasstrom (d.h. der Abgasstrom nach dem Entfernen zumindest eines Teils des CO₂s) vorliegend als "Restabgasstrom" bezeichnet wird. Der "Restabgasstrom" wird nach Durchlaufen der Abgas-Aufbereitungseinrichtung der Beschleunigungsgas-Zuführeinrichtung komprimiert zugeführt.

Vorzugsweise ist die Abgas-Aufbereitungseinrichtung dazu ausgebildet, zum Entfernen des CO₂s aus dem Abgasstrom, das (gasförmige) CO₂ zu verflüssigen. Insbesondere ist die Abgas-Aufbereitungseinrichtung dazu ausgebildet, den Abgasstrom (im gesamten) zu verdichten (komprimieren) und anschließend derart abzukühlen, dass zumindest eine Teilmenge des (zunächst gasförmigen) CO₂ verflüssigt wird. Das zumindest teilweise Entfernen des CO₂s aus dem Abgasstrom umfasst insofern das Verdichten und das anschließende Abkühlen des Abgasstroms. Das verflüssigte CO₂ kann dann mittels einer CO₂-Abtrenneinrichtung von der Gasphase aus dem Abgasstrom abgetrennt werden. Bei der CO₂-Abtrenneinrichtung handelt es sich insbesondere um eine Einrichtung zur Trennung von Gas und Flüssigkeit. Eine solche Ausgestaltung ist besonders energieeffizient, da der für das Verflüssigen des CO₂s komprimierte Abgasstrom für seine spätere Verwendungen als (recyceltes) Beschleunigungsgas bereits komprimiert ist. Es ist insofern nicht erforderlich, den Restabgasstrom erneut zu komprimieren.

Im Rahmen einer vorteilhaften Weiterbildung kann die Abgas-Aufbereitungseinrichtung dazu eingerichtet sein, das im Abgasstrom enthaltene CO₂ nur teilweise aus dem Abgasstrom zu entfernen, insbesondere derart, dass ein CO₂-Anteil im Restabgasstrom (also nach dem teilweisen Entfernen des CO₂s) noch mindestens 5%, vorzugsweise mindestens 10%, des CO₂-Anteils im Abgasstrom beträgt. Eine solche Ausgestaltung hat den Vorteil, dass durch den bewusst verbleibenden CO₂-Anteil im Restabgasstrom - und somit im Beschleunigungsgas - der CO₂-Schnee-Strahl eine verringerte Luftfeuchtigkeit aufweist, insbesondere im Vergleich zu den bekannten Systemen, bei denen stets frische Druckluft als Beschleunigungsgas der CO₂-Schnee-Strahl-Düse zugeführt wird. Auf diese Weise können die Reinigungsmöglichkeiten der vorgeschlagenen Reinigungsanlage erweitert werden. Beispielsweise können somit auch feuchtigkeitssensible Bauteile gereinigt werden. Zudem wird das Reinigen in trockenen Reinraumumgebungen (low dew point clean rooms) ermöglicht. Darüber hinaus wird ein energieeffizienter Betrieb der Abgas-Aufbereitungseinrichtung begünstigt.

Im Rahmen einer vorteilhaften Weiterbildung kann die Abgas-Aufbereitungseinrichtung derart ausgebildet sein, dass der Abgasstrom (vor dem Entfernen des CO₂s) und der Restabgasstrom (nach dem Entfernen des CO₂s) über Kreuz geführt werden, um Wärmenergie zwischen dem Abgasstrom und dem Restabgasstrom übertragen zu können. Dies ermöglicht es, auf energieeffiziente Weise, den Abgasstroms vor dem Entfernen des CO2s vorzukühlen und andererseits den Restabgasstroms vor dem Zuführen zu der Beschleunigungsgas-Zuführeinrichtung vorzuwärmen. Auf diese Weise kann eine Energieeffizienz der Reinigungsanlage weiter gesteigert werden. Insbesondere umfasst die Abgas-Aufbereitungseinrichtung eine Wärmetauschereinrichtung, welche dazu eingerichtet ist, Wärmeenergie zwischen dem, insbesondere komprimierten, Abgasstrom und dem (bereits aus einem vorherigen Absaugvolumen komprimierten) CO₂-reduzierten Restabgasstrom auszutauschen. Die Wärmetauschereinrichtung weist insbesondere eine Abgasführung zur Führung des Abgasstroms und eine Restabgasführung zur Führung des Restabgasstroms auf. Die Wärmetauschereinrichtung kann insbesondere einen oder mehrere Wärmetauscher aufweisen.

In vorteilhafter Weise umfasst die Abgas-Aufbereitungseinrichtung eine Verdichtereinrichtung, welche dazu ausgebildet ist, den aus dem Abgasauslass der Reinigungskammer austretenden Abgasstrom vor dem Entfernen des CO2s zu verdichten (komprimieren), insbesondere sodass ein die Verdichtereinrichtung verlassender verdichteter (komprimierter) Abgasstrom einen Druck zwischen 10 und 65 bar, vorzugsweise zwischen 10 und 40 bar, weiter vorzugsweise zwischen 15 und 35 bar, weiter vorzugsweise zwischen 20 und 30 bar, aufweist. Die Verdichtereinrichtung kann einen Kompressor umfassen. Bei der vorgeschlagenen Reinigungsanlage erfüllt eine solche Verdichtereinrichtung insbesondere eine Doppelfunktion: einerseits wird durch die Verdichtung des Abgasstroms eine Abtrennung des CO₂s durch CO₂-Verflüssigung begünstigt, andererseits kann bereits an dieser Stelle der Abgasstrom auf einen Betriebsdruck derart komprimiert werden, dass ein Restabgasstrom nach dem Entfernen des CO₂s bereit für den Einsatz als Beschleunigungsgas ist. Insofern können zwei unterschiedliche Funktionen in einem Bauteil realisiert werden, was zu einer Kosten- und Energieeffizienz beiträgt.

Vorzugsweise umfasst die Abgas-Aufbereitungseinrichtung außerdem eine der Verdichtereinrichtung nachgeschaltete (d.h. stromabwärts der Verdichtereinrichtung angeordnete) Kühleinrichtung (Kältemaschine), welche dazu ausgebildet ist, einen die Verdichtereinrichtung verlassenden komprimierten Abgasstrom zu kühlen, insbesondere derart, dass zumindest eine Teilmenge des in dem komprimierten Abgasstrom enthaltenen CO₂s verflüssigt wird. Ein die Kühleinrichtung verlassender Abgaskühlstrom (gekühlter Abgasstrom) umfasst insofern insbesondere ein Gemisch aus einer Gaskomponente und flüssigem CO₂. Die Gaskomponente umfasst insbesondere Beschleunigungsgas und Rest-CO₂-Gas (d.h. nicht verflüssigtes CO₂). Der Abgaskühlstrom weist insbesondere einen Druck zwischen 20 und 30 bar auf. Insbesondere ist die Kühleinrichtung dazu eingerichtet, den komprimierten Abgasstrom auf eine Temperatur zwischen -56,6°C und +20°C, vorzugsweise zwischen - 50°C und - 30 °C, weiter vorzugsweise zwischen -45°C und -35°C, abzukühlen. Die Kühleinrichtung kann beispielsweise als ein- oder mehrstufige Kompressionskältemaschine (grundsätzlich aus dem Stand der Technik bekannt) ausgebildet sein.

Vorzugsweise umfasst die Abgas-Aufbereitungseinrichtung außerdem eine der Kühleinrichtung nachgeschaltete (d.h. stromabwärts der Kühleinrichtung vorgesehene) CO₂-Abtrenneinrichtung (Separator), welche dazu ausgebildet ist, das flüssige CO₂ aus dem Abgaskühlstrom unter Erhalt des Restabgasstroms abzutrennen. Bei der CO₂-Abtrenneinrichtung handelt es sich insbesondere um eine Einrichtung zur Trennung von Gas und Flüssigkeit. Beispielsweise kann die CO₂-Abtrenneinrichtung als Tropfenabscheider ausgebildet sein.

Die Abgas-Aufbereitungseinrichtung weist vorzugsweise eine Medienführung derart auf, dass ein die CO₂-Abtrenneinrichtung verlassender Flüssig-CO₂-Strom (Strom aus flüssigem CO2) der CO₂-Zuführeinrichtung zugeführt wird und ein die CO₂-Abtrenneinrichtung verlassender Restabgasstrom als Beschleunigungsgas der Beschleunigungsgas-Zuführeinrichtung zugeführt wird.

Im Rahmen einer vorteilhaften Weiterbildung kann die Abgas-Aufbereitungseinrichtung außerdem eine CO₂-Verdichtereinrichtung, insbesondere Druckerhöhungspumpe, zur Erhöhung eines Drucks des Flüssig-CO₂-Stroms (Flüssig-CO2-Drucks) auf den Betriebsdruck der CO₂-Schnee-Strahldüse, insbesondere auf 20-120 bar, vorzugsweise 60 bar, aufweisen.

Weiter kann es vorteilhaft sein, wenn die CO₂-Zuführeinrichtung einen CO₂-Zwischenspeicher für flüssiges CO₂ aufweist. Der Flüssig-CO₂-Strom kann dann dem CO₂-Zwischenspeicher zugeführt werden. Der CO₂-Zwischenspeicher ist vorzugsweise außerdem mit einer, insbesondere externen, CO₂-Versorgungseinrichtung zur Versorgung der Reinigungsanlage mit "frischem" CO₂ verbunden. Die CO₂-Versorgungseinrichtung kann beispielsweise einen CO₂-Speicher für flüssig-CO₂ (bspw. CO₂-Flasche) aufweisen.

Weiter kann es vorteilhaft sein, wenn die Beschleunigungsgas-Zuführeinrichtung einen Beschleunigungsgas-Zwischenspeicher aufweist, in welchen der komprimierte Restabgasstrom zugeführt wird. Optional kann der Beschleunigungsgas-Zwischenspeicher mit einer externen Druckluftversorgung zur Versorgung mit Druckluft strömungsverbunden sein.

Wie vorstehend erwähnt, weist die Abgas-Aufbereitungseinrichtung vorzugsweise eine Wärmetauschereinrichtung mit einer Abgasführung zur Führung des Abgasstroms und einer Restabgasführung zur Führung des Restabgasstroms auf. Bei einer Ausgestaltung der Abgas-Aufbereitungseinrichtung mit Verdichtereinrichtung und Kühleinrichtung ist die Abgasführung vorzugsweise in einem Strömungsweg zwischen Verdichtereinrichtung und Kühleinrichtung angeordnet. Die Restabgasführung ist insbesondere in einem Strömungsweg zwischen Kühleinrichtung und Beschleunigungsgas-Zuführeinrichtung, weiter insbesondere in einem Strömungsweg zwischen (Flüssig-)CO₂-Abtrenneinrichtung und Beschleunigungsgas-Zuführeinrichtung angeordnet.

Weiter kann es vorteilhaft sein, wenn die Abgas-Aufbereitungseinrichtung in einem Strömungsweg zwischen Verdichtereinrichtung und Kühleinrichtung, insbesondere zwischen Verdichtereinrichtung und Wärmetauscher, eine Gastrocknungseinrichtung, vorzugsweise umfassend wenigstens einen Adsorptionstrockner, zur Reduktion des Drucktaupunkts aufweist. Auf diese Weise kann eine Vereisung der nachfolgenden Komponenten (Kühleinrichtung, Leitungen...) verhindert werden. Insbesondere kann die Gastrocknungseinrichtung dazu ausgebildet sein, den Drucktaupunkt auf einen Wert unter die minimal auftretende Temperatur im weiteren Stromverlauf zu reduzieren.

Weiter kann es vorteilhaft sein, wenn die Abgas-Aufbereitungseinrichtung stromabwärts der Verdichtereinrichtung, insbesondere in einem Strömungsweg zwischen Verdichtereinrichtung und Kühleinrichtung, weiter insbesondere zwischen Verdichtereinrichtung und Wärmetauschereinrichtung, eine Abzweigeeinrichtung aufweist, um bedarfsweise einen Teilstrom des komprimierten (aber noch nicht CO₂-reduzierten) Abgasstroms der Beschleunigungsgas-Zuführeinrichtung zuzuführen. Auf diese Weise kann beispielsweise ein Mengenverhältnis zwischen verflüssigtem CO₂ und Beschleunigungsgas so geregelt werden, dass es einem bevorzugten Verbrauchsverhältnis der CO₂-Schnee-Strahldüsen entspricht.

Weiter kann es vorteilhaft sein, wenn die Abgas-Aufbereitungseinrichtung eine, insbesondere der Verdichtereinrichtung vorgeschaltete (d.h. stromaufwärts der Verdichtereinrichtung angeordnete), Absaugeinrichtung, insbesondere Gebläseeinrichtung, zum Absaugen des Abgasstroms aus dem Abgasauslass der Reinigungskammer aufweist. Auf diese Weise kann der Abgasstrom effizient abgeführt werden und insbesondere ein Anhäufen von abgereinigten Schmutzpartikeln in der Reinigungskammer verhindert werden.

Weiter kann es vorteilhaft sein, wenn die Abgas-Aufbereitungseinrichtung eine, insbesondere der Verdichtereinrichtung, weiter insbesondere der Absaugeinrichtung, vorgeschaltete Filtereinrichtung zur Abscheidung von optional in dem Abgasstrom vorhandenen Partikeln, bspw. Schmutzpartikeln, aufweist. Auf diese Weise kann der Abgasstrom vor der Weiterverarbeitung gereinigt werden, was insbesondere bei der vorgeschlagenen Rückführung von Beschleunigungsgas vorteilhaft ist, um ein Anhäufen von Schmutzpartikeln in der Reinigungskammer oder der CO₂-Schnee-Strahldüse zu verhindern.

Weiter kann es vorteilhaft sein, wenn die Reinigungskammer einen Spülgaseinlass zum Einlass eines Spülgasstroms aufweisen. Der Spülgasstrom kann ein, insbesondere stromabwärts der optionalen Filtereinrichtung, von dem Abgasstrom abgeleiteter Teilstrom sein. Insbesondere kann die Abgas-Aufbereitungseinrichtung in einem Strömungsweg zwischen dem Abgasauslass und der Verdichtereinrichtung, insbesondere stromabwärts der Filtereinrichtung und stromabwärts der optionalen Absaugeinrichtung, eine Abzweigeeinrichtung zum Abzweigen des Spülgasstroms von dem Abgasstrom aufweisen.

Die wenigstens eine CO₂-Schnee-Strahl-Düse kann unterschiedlich ausgebildet sein. Vorzugsweise umfasst die CO₂-Schnee-StrahlDüse einen CO₂-Kanal und eine den CO₂-Kanal umgebende Mantelstrahldüse zur Erzeugung eines Mantelstrahl aus dem Beschleunigungsgas.

Der CO₂-Kanal weist insbesondere eine Eintrittsöffnung für flüssiges CO₂ und eine Austrittsöffnung auf. Der CO₂-Kanal kann beispielsweise durch einen, insbesondere zylindrischen, Hohlraum eines Rohrkörpers, insbesondere durch ein Kapillarrohr, gebildet sein. Der CO₂-Kanal mündet vorzugsweise in einen Expansionsbereich, in welchem sich flüssiges CO₂ unter Entspannung in ein CO₂-Gas/CO₂-Schnee Gemisch umwandelt. Bei dem Expansionsbereich kann es sich insbesondere um einen dem CO₂-Kanal in Strömungsrichtung nachgelagerten (also stromabwärts von dem CO₂-Kanal angeordneten) Bereich handeln, in welchem ein Strömungsquerschnitt gegenüber dem CO₂-Kanal vergrößert ist. Es ist auch denkbar, dass ein stromabwärtsgelegener Endabschnitt des CO₂-Kanals den Expansionsbereich oder zumindest einen Abschnitt des Expansionsbereichs bildet. Beispielsweise ist es denkbar, dass sich der CO₂-Kanal in dem Endabschnitt in Strömungsrichtung gesehen, insbesondere konisch, aufweitet. Dies schließt nicht aus, dass bereits in dem CO₂-Kanal eine schrittweise Umwandlung von flüssigem CO₂ in das CO₂-Gas/CO₂-Schnee Gemisch stattfindet.

Die Mantelstrahldüse ist insbesondere derart ausgebildet, dass der Mantelstrahl das in dem Expansionsbereich entstehende CO₂-Gas/CO₂-Schnee Gemisch in einer Umfangsrichtung umgibt und in einer Strahlrichtung beschleunigt. Der hierdurch entstehende CO₂-Schnee-Strahl wird somit in Strahlrichtung aus der CO₂-Schnee-Strahl-Düse ausgegeben. Die Mantelstrahldüse ist insofern zum Erzeugen eines Mantelstrahls aus dem Beschleunigungsgas ausgebildet, welcher das in dem Expansionsbereich entstehende CO₂-Gas/CO₂-Schnee Gemisch umgibt und dieses in Strahlrichtung beschleunigt. In vorteilhafter Weise kann die Mantelstrahldüse den CO₂-Kanal umgeben. Hierdurch wird ein stabiler Mantelstrahl und eine effektive Beschleunigung des CO₂-Gas/CO₂-Schnee Gemisches begünstigt. In vorteilhafter Weise kann die Mantelstrahldüse als Überschalldüse ausgebildet sein. Insbesondere kann die Mantelstrahldüse eine Laval-Geometrie aufweisen. Auf diese Weise kann die Geschwindigkeit der Schneepartikel und somit ein auf eine Oberfläche übertragbarer Impuls weiter erhöht werden. Die Mantelstrahldüse kann beispielsweise als Kanal zwischen einem äußeren Gehäuseabschnitt des Düsengehäuses der CO₂-Schnee-Strahl-Düse und einer den CO₂-Kanal begrenzenden Wandung, bspw. dem Rohrkörper, ausgebildet sein.

Die Erfindung betrifft auch ein Verfahren zum Reinigen einer Oberfläche eines Gegenstands mittels eines CO2-Schnee-Strahls. Insbesondere ist das Verfahren zum Reinigen einer Oberfläche eines Gegenstands mittels einer vorstehend beschriebenen Reinigungsanlage ausgebildet. Insofern kann es sich bei dem Verfahren auch um ein Verfahren zum Betreiben einer solchen Reinigungsanlage handeln.

Das Verfahren umfasst das Erzeugen eines CO₂-Schnee-Strahls mittels einer CO₂-Schnee-Strahldüse ausgehend von flüssigem CO₂ und Beschleunigungsgas. Das Erzeugen des CO₂-Schnee-Strahls umfasst insbesondere das Versorgen der CO₂-Schnee-Strahldüse mit flüssigem CO₂ über eine CO₂-Zuführeinrichtung und das Versorgen der CO₂-Schnee-Strahldüse mit Beschleunigungsgas über eine Beschleunigungsgas-Zuführeinrichtung. In einem weiteren Schritt wird dann eine zu reinigende Oberfläche des Gegenstands mit dem CO₂-Schnee-Strahl beaufschlagt und somit gereinigt. Ein beim Reinigen entstehender Abgasstrom umfassend aus dem CO₂-Schnee entstehendes CO₂-Gas, Beschleunigungsgas und optional abgereinigte Partikel wird sodann - kontinuierlich während des Reinigungsprozesses oder in vorgegebenen zeitlichen Abständen - abgeführt, insbesondere abgesaugt, und aufbereitet. Das Aufbereiten umfasst das zumindest teilweise Entfernen des CO₂-Gases aus dem Abgasstrom unter Erhalt eines CO₂-Stroms und eines um den CO₂-Strom reduzierten Restabgasstrom. Gemäß dem Verfahren wird zumindest eine Teilmenge des CO₂-Stroms - zur Wiederverwendung bei der Erzeugung von CO₂-Schnee - der der CO₂-Zuführeinrichtung (und sodann der CO₂-Schnee-Strahldüse) zugeführt. Darüber hinaus wird zumindest eine Teilmenge des Restabgasstroms der Beschleunigungsgas-Zuführeinrichtung zur Wiederverwendung als Beschleunigungsgas in der CO₂-Schnee-Strahldüse zugeführt.

Vorzugsweise umfasst das Entfernen des CO₂s aus dem Abgasstrom das Verflüssigen zumindest einer Teilmenge des im Abgasstrom enthaltenen (gasförmigen) CO₂s. Insofern kann es sich bei dem CO₂-Strom insbesondere um einen Flüssig-CO₂-Strom handeln.

Im Rahmen einer vorteilhaften Weiterbildung kann das zumindest teilweise Entfernen des CO₂ aus dem Abgasstrom das Verflüssigen des CO₂s durch Verdichten des Abgasstroms und anschließendes Abkühlen des verdichteten Abgasstroms umfassen.

Weiterhin kann es vorteilhaft sein, wenn der Abgasstrom, insbesondere nach dem Verdichten und vor dem Abkühlen, und der Restabgasstrom einer Wärmetauschereinrichtung zum Wärmeaustausch zwischen dem Abgasstrom und dem Restabgasstrom zugeführt werden.

Weiterhin kann es vorteilhaft sein, wenn der der Abgasstrom nach dem Verdichten und vor dem Abkühlen in einer Gastrocknungseinrichtung getrocknet wird, insbesondere mittels eines Adsorptionstrockners.

Die vorstehend in Bezug auf die Reinigungsanlage beschriebenen Merkmale und Vorteile können auch zur Ausgestaltung des Verfahrens dienen, sodass zur Vermeidung von Wiederholungen auf vorstehende Offenbarung hierzu verwiesen wird.

Die Erfindung wird im Folgenden anhand der Figuren näher erläutert. Es zeigen:
Fig. 1 vereinfachte schematische Darstellung einer beispielhaften Ausgestaltung einer Reinigungsanlage; und
Fig. 2 skizzierte Darstellung einer beispielhaften Ausgestaltung einer CO₂-Schnee-Strahldüse.

In der nachfolgenden Beschreibung sowie in den Figuren sind für identische oder einander entsprechende Merkmale jeweils dieselben Bezugszeichen verwendet.

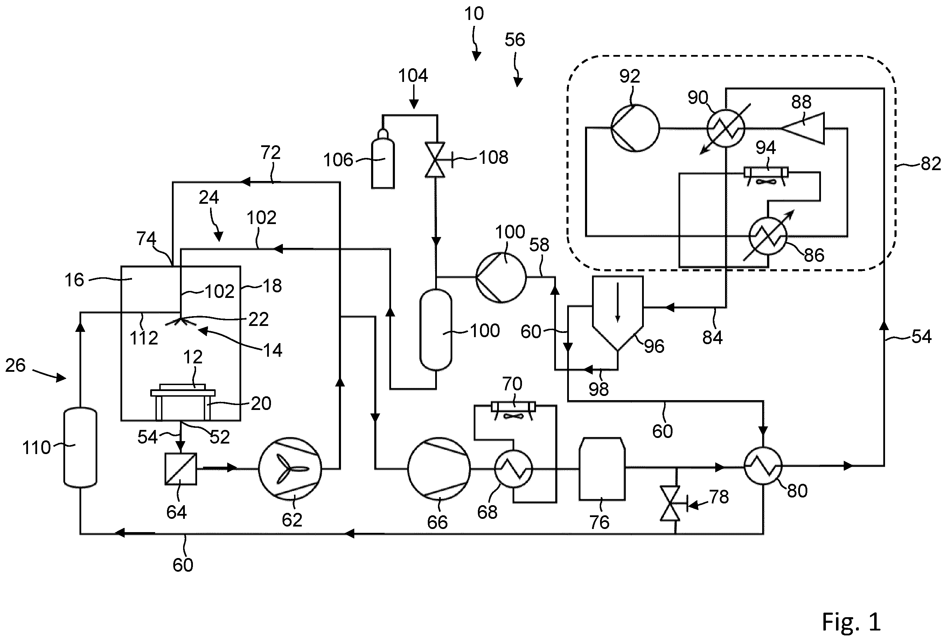

Die Figur 1 zeigt in vereinfachter schematischer Darstellung eine beispielhafte Ausgestaltung einer Reinigungsanlage, welche insgesamt mit dem Bezugszeichen 10 bezeichnet ist. Die Reinigungsanlage 10 ist zum Reinigen einer Oberfläche eines Gegenstands 12 mittels eines CO₂-Schnee-Strahls 14 ausgebildet.

Die Reinigungsanlage 10 umfasst eine Reinigungskammer 16 zur Aufnahme des zu reinigenden Gegenstands. Die Reinigungskammer 16 umfasst im Beispiel eine, insbesondere im Wesentlichen gasdicht ausgebildete, Umhausung 18. Die Reinigungskammer 16 kann optional einen Träger 20, bspw. Tisch oder Werkstückaufnahme, zur Aufnahme des Gegenstands 12 aufweisen.

Die Reinigungsanlage 10 umfasst außerdem wenigstens eine CO₂-Schnee-Strahldüse 22 zum Erzeugen des CO₂-Schnee-Strahls 14 ausgehend von flüssigem CO₂ und einem Beschleunigungsgas. Die Co2-Schnee-Strahldüse ist in der Reinigungskammer 16 angeordnet. Zur Versorgung der CO₂-Schnee-Strahldüse 22 mit Betriebsfluid weist die Reinigungsanlage 10 eine CO₂-Zuführeinrichtung 24 zum Zuführen von flüssigem CO₂ zu der CO₂-Schnee-Strahldüse 22 und eine Beschleunigungsgas-Zuführeinrichtung 26 zum Zuführen von Beschleunigungsgas zu der CO₂-Schnee-Strahldüse 22 auf (nachfolgend noch näher erläutert).

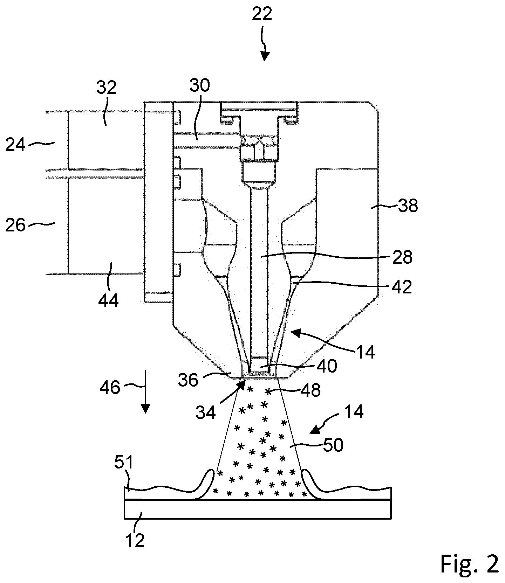

Eine beispielhafte Ausgestaltung einer CO₂-Schnee-Strahldüse 22 wird nachfolgend unter Bezugnahme auf die Figur 2 beschrieben. Bei nicht dargestellten Ausgestaltungen kann die CO₂-Schnee-Strahldüse 22 aber auch unterschiedlich ausgebildet sein.

Die CO₂-Schnee-Strahldüse 22 gemäß Figur 2 umfasst einen CO₂-Kanal 28, welcher beispielhaft als Hohlraum eines zylindrischen Rohrkörpers, bspw. Kapillare, gebildet ist. Der CO₂-Kanal 28 ist über entsprechende Zuleitungen 30 mit einem CO₂-Anschluss 32 strömungsverbunden, welcher wiederum von der CO₂-Zuführeinrichtung 24 mit flüssigem CO₂ versorgbar ist.

Wie aus Figur 2 ersichtlich, mündet der CO₂-Kanal 28 in einen stromabwärts gelegenen Expansionsbereich 34 ein, in welchem das flüssige CO₂ sich in ein CO₂-Gas/CO₂-Schnee Gemisch umwandelt. Der Expansionsbereich 34 ist beispielhaft von einer Gehäusewandung 36 eines Düsengehäuses 38 der CO₂-Schnee-StrahlDüse 22 umgrenzt.

Im dargestellten Beispiel weist der CO₂-Kanal 28 einen optionalen Endabschnitt 40 auf, in welchem sich der CO₂-Kanal 28 bereits leicht aufweitet. Bereits in diesem Endabschnitt 40 und auch bereits stromaufwärts in dem CO₂-Kanal 28 kann es schon zur teilweisen Umwandlung von flüssigem CO₂ zu dem CO₂-Gas/CO₂-Schnee Gemisch kommen.

Die CO₂-Schnee-Strahl-Düse 22 umfasst außerdem eine, im Beispiel den CO₂-Kanal 28 umschließende, Mantelstrahldüse 42 zum Erzeugen eines Mantelstrahls aus dem Beschleunigungsgas auf. Die Mantelstrahldüse 42 weist beispielhaft eine Laval-Geometrie auf, um das das Beschleunigungsgas auf Überschall zu beschleunigen.

Die Mantelstrahldüse 42 ist mit einem Beschleunigungsgas-Anschluss 44 strömungsverbunden, welcher wiederum über die Beschleunigungsgas-Zuführeinrichtung 26 mit Beschleunigungsgas versorgbar ist.

Wie vorstehend erwähnt, umgibt der gebildete Mantelstrahl aus dem Beschleunigungsgas das im Expansionsbereich 34 entstehende CO₂-Gas/CO₂-Schnee-Gemisch und beschleunigt dieses weiter. Der CO₂-Schnee-Strahl 14 umfasst insofern eine Mischung aus CO2-Schnee 48, Beschleunigungsgas 50 und CO₂-Gas. Der so gebildete CO₂-Schnee-Strahl 14 wird in einer Strahlrichtung 46 aus der CO₂-Schnee-Strahl-Düse 22 ausgegeben.

Der CO₂-Schnee-Strahl 14 kann wie vorstehend erläutert und in an sich bekannter Weise zum Entfernen von filmischen und/oder partikulären Verunreinigungen 51 von einer Oberfläche eines Gegenstands 12 verwendet werden.

Wie vorstehend erwähnt, entsteht beim Reinigen ein Abgasgemisch in der Reinigungskammer 16 umfassend Beschleunigungsgas, gasförmiges CO₂ (aus CO₂-Schnee), und, optional, abgereinigte Partikel.

Zum Abführen dieses Abgasgemisches aus der Reinigungskammer 16 weist die Reinigungskammer einen Abgasauslass 52 auf. Ein aus dem Abgasauslass 52 abgeführter Abgasstrom wird nachfolgend mit dem Bezugszeichen 54 bezeichnet.

Die Reinigungsanlage 10 weist außerdem eine Abgas-Aufbereitungseinrichtung auf, welche insgesamt mit dem Bezugszeichen 56 bezeichnet ist. Wie vorstehend erwähnt, ist die Abgas-Aufbereitungseinrichtung 56 dazu eingerichtet, in dem Abgasstrom 54 enthaltenes CO₂ zumindest teilweise zu entfernen und als Flüssig-CO₂-Strom 58 der CO₂-Zuführeinrichtung 24 - zur Wiederverwendung bei der Erzeugung von CO₂-Schnee in der CO₂-Schneee-Strahldüse 22 - zuzuführen. Die Abgas-Aufbereitungseinrichtung 56 ist außerdem dazu ausgebildet, einen durch das teilweise Entfernen des CO₂s an CO₂ reduziertem Restabgasstrom 60 der Beschleunigungsgas-Zuführeinrichtung 26 - zur Wiederverwendung als Beschleunigungsgas in der CO₂-Schneee-Strahldüse 22 - und optional als Spülgas 74 - zuzuführen.

Im Folgenden wird eine beispielhafte Ausgestaltung der Abgas-Aufbereitungseinrichtung 56 unter Bezugnahme auf die Figur 1 im Detail erläutert.

Die Abgas-Aufbereitungseinrichtung 56 weist im Beispiel eine optionale Absaugeinrichtung 62, bspw. in Form eines Gebläses, zum Absaugen des Abgasstroms 54 aus der Reinigungskammer 16 auf.

Vorzugsweise ist stromaufwärts der optionalen Absaugeinrichtung 62 eine Filtereinrichtung 64 zum Abscheiden von in dem Abgasstrom enthaltenen Partikeln (bspw. Schmutzpartikel) vorgesehen.

Der von der optionalen Absaugeinrichtung 62 abgesaugte Abgasstrom 54 wird sodann einer Verdichtereinrichtung 66 der Abgas-Aufbereitungseinrichtung 56 zugeführt. Die Verdichtereinrichtung 66 ist dazu ausgebildet, den Abgasstrom 54 zu verdichten, insbesondere auf einen Druck zwischen 10 und 65 bar, vorzugsweise ca. 25 bar. Die Verdichtereinrichtung 66 kann einen oder mehrere Kompressoren aufweisen.

Optional kann der Verdichtereinrichtung 66 ein Verdichter-Wärmetauscher 68 zur Abführung von Kompressionswärme an ein Wärmeträgermedium oder an die Umgebungsluft nachgeschaltet sein. In Figur 1 ist beispielhaft außerdem eine Wärmeabfuhreinrichtung 70 zur Abführung der Wärme an Umgebungsluft vorgesehen.

Wie in Figur 1 ersichtlich, ist die Abgas-Aufbereitungseinrichtung 56 optional derart ausgebildet, dass vor dem Verdichten des Abgasstroms in der

Verdichtereinrichtung 66 ein Teilstrom des Abgasstroms 54 (kontinuierlich während des Betriebs oder lediglich bedarfsweise) abgezweigt werden kann und als Spülgasstrom 72 über einen Spulgaseinlass 74 der Reinigungskammer 16 zugeführt werden kann. Alternativ oder zusätzlich kann der Spülgaseinlass 74 mit einer externen Spülgasversorgung, bspw. Stickstoffversorgung, versorgbar sein.

Im Beispiel wird der von der Verdichtereinrichtung 66 komprimierte Abgasstrom 54 einer optionalen Gastrocknungseinrichtung 76 der Abgas-Aufbereitungseinrichtung 56 zugeführt. Wie vorstehend erwähnt, ist die Gastrocknungseinrichtung 76 insbesondere dazu ausgebildet, den Abgasstrom 54 zu trocknen, um einen Drucktaupunkt des verdichteten Abgasstroms 54 zu verringern.

Im Beispiel umfasst die Abgas-Aufbereitungseinrichtung 56 außerdem stromabwärts der optionalen Gastrockeneinrichtung 76 eine optionale Abzweigeeinrichtung 78, um bedarfsweise einen Teilstrom des komprimierten und optional getrockneten Abgasstroms 54 der Beschleunigungsgas-Zuführeinrichtung 26 zuzuführen. Die Abzweigeeinrichtung 78 kann ein oder mehrere Ventile umfassen.

Die Abgas-Aufbereitungseinrichtung 56 umfasst vorzugsweise stromabwärts der Verdichtereinrichtung 66 eine Wärmetauschereinrichtung 80 zur Wärmeübertragung zwischen dem verdichteten Abgasstrom 54 und dem Restgasstrom 60. Die Wärmetauschereinrichtung 80 ist insbesondere dazu ausgebildet, dem verdichteten (und dabei erwärmten) Abgasstrom 54 Wärme zu entziehen (und diesen somit vorzukühlen) und dem Restabgasstrom 60 zuzuführen (und diesen damit vorzuwärmen). Die Wärmetauschereinrichtung 80 kann einen oder mehrere Wärmetauscher aufweisen.

Im Beispiel ist die Wärmetauschereinrichtung 80 stromabwärts der Gastrocknungseinrichtung 76 angeordnet. Bei nicht dargestellten Ausgestaltungen kann die Wärmetauschereinrichtung 80 aber auch vor der Gastrocknereinrichtung 76 angeordnet sein.

Der verdichtete (und optional durch die Wärmetauschereinrichtung 80 vorgekühlte) Abgasstrom 54 wird sodann einer Kühleinrichtung 82 der Abgas-Aufbereitungseinrichtung 56 zugeführt. Die Kühleinrichtung 82 ist dazu ausgebildet, den verdichteten Abgasstrom 54 derart abzukühlen, dass zumindest eine Teilmenge des im Abgasstrom 54 enthaltenen CO₂s verflüssigt wird. Ein die Kühleinrichtung 82 verlassender Abgaskühlstrom 84 umfasst insofern ein Gemisch aus Beschleunigungsgas, gasförmigem Rest-CO2 und flüssigem CO2.

Im Beispiel umfasst die Kühleinrichtung einen Kondensator 86, in welchem ein Kältemittel durch Wärmeabfuhr verflüssigt wird, eine Drossel 88 zur Entspannung des Kältemittels, und einen Verdampfer 90, in welchem das Kältemittel verdampft und dabei dem Abgasstrom 54 Wärme entzieht. Die Kühleinrichtung umfasst außerdem einen Kältemittelverdichter 92 zur Kompression des Kältemittels sowie eine Wärmeabführeinrichtung 94 zur Abführung der Kompressionswärme des Kältemittels an die Umgebung.

Die gezeigte Ausgestaltung der Kühleinrichtung 82 ist aber lediglich beispielhaft. Bei nicht dargestellten Ausgestaltungen kann die Kühleinrichtung 82 auch beliebige andere Konfigurationen aufweisen.

Der die Kühleinrichtung 82 verlassende Abgaskühlstrom 84 durchläuft sodann eine CO₂-Abtrenneinrichtung 96 der Abgas-Aufbereitungseinrichtung 56. Die CO2-Abtrenneinrichtung ist dazu ausgebildet, das flüssige CO2 aus dem Abgaskühlstrom 84 abzutrennen. Die CO2-Abtrenneinrichtung ist insofern dazu ausgebildet, den Abgaskühlstrom 84 in einen Flüssig-CO₂-Strom 58 und einen Restabgasstrom 60 aufzuteilen.

Wie aus Figur 1 ersichtlich, wird der Flüssig-CO₂-Strom 58 der CO₂-Zuführeinrichtung 24 zugeführt. Optional kann der Flüssig-CO₂-Strom 58 in einer CO₂-Verdichtereinrichtung 100 auf den Betriebsdruck der CO₂-Schnee-Strahldüse 22, vorzugsweise auf ca. 60 bar, gebracht werden.

Im Beispiel gemäß Figur 1 umfasst die CO₂-Zuführeinrichtung 24 einen optionalen CO₂-Zwischenspeicher 102 für flüssiges CO₂, in welchen der (optional mittels der CO2-Verdichtereinrichtung 100 verdichtete) Flüssig-CO₂-Strom 58 zugeführt wird. Der CO₂-Zwischenspeicher 100 ist über entsprechende Fluidleitungen 102 mit dem CO₂-Anschluss 32 der CO2-Schnee-Strahldüse 22 strömungsverbunden. Optional können zwischen dem CO₂-Zwischenspeicher 100 und dem CO₂-Anschluss 32 der CO₂-Schnee-Strahldüse 22 noch ein Filter zur Aufbereitung des CO₂ und/oder ein Ventil zum Starten/Stoppen des Strahlprozesses vorgesehen sein.

Vorzugsweise ist der CO₂-Zwischenspeicher außerdem mit einer CO₂-Versorgungseinrichtung 104 mit "frischem", d.h. noch nicht im Medienkreislauf der Reinigungsanlage 10 befindlichen, flüssigem CO₂ versorgbar. Im Beispiel umfasst die CO2-Versorgungseinrichtung 104 einen CO₂-Tank 106 (bspw. CO₂-Flasche) und eine Ventileinrichtung 108 zum bedarfsweisen Zuführen von "frischem" CO₂ zu dem CO₂-Zwischenspeicher 100.

Der die CO₂-Abtrenneinrichtung 96 verlassende Restabgasstrom 60 durchläuft im Beispiel die vorstehend erwähnte Wärmetauschereinrichtung 80, wird dort vorgewärmt, und sodann der Beschleunigungsgas-Zuführeinrichtung 26 zugeführt.

Im Beispiel gemäß Figur 1 umfasst die Beschleunigungsgas-Zuführeinrichtung 26 einen optionalen Beschleunigungsgas-Zwischenspeicher 110, welcher über entsprechende Fluidleitungen 112 mit dem Beschleunigungsgas-Anschluss 44 der CO2-Schnee-Strahldüse 22 verbunden ist. Optional können zwischen dem Beschleunigungsgas-Zwischenspeicher 110 und dem Beschleunigungsgas-Anschluss 44 der CO₂-Schnee-Strahldüse 22 noch ein Filter zur Aufbereitung des Beschleunigungsgases und/oder ein Ventil zum Starten/Stoppen des Strahlprozesses vorgesehen sein.

Bei der vorgeschlagenen Reinigungsanlage 10 wird insofern sowohl das CO2 als auch das Beschleunigungsgas in einem Kreislauf geführt und wiederverwendet.

## Patentansprüche

1. Reinigungsanlage zur Reinigung von Oberflächen mittels eines CO₂-Schnee-Strahls (14) umfassend CO₂-Schnee (48) und Beschleunigungsgas (50), umfassend:
- eine Reinigungskammer (16) zur Aufnahme eines zu reinigenden Gegenstands (12), wobei die Reinigungskammer (16) einen Abgasauslass (52) zum Auslass eines Abgasstroms (54), insbesondere umfassend ein Gemisch aus CO₂, Beschleunigungsgas (50) und optional abgereinigten Partikeln, aufweist,
- wenigstens eine in der Reinigungskammer (16) angeordnete CO₂-Schnee-Strahldüse (22) zum Erzeugen eines CO₂-Schnee-Strahls (14) aus flüssigem CO₂ und Beschleunigungsgas (50),
- eine CO₂-Zuführeinrichtung (24) zum Zuführen von flüssigem CO₂ zu der CO₂-Schnee-Strahldüse (22),
- eine Beschleunigungsgas-Zuführeinrichtung (26) zum Zuführen von Beschleunigungsgas zu der CO₂-Schnee-Strahldüse (22),
**gekennzeichnet durch**
- eine Abgas-Aufbereitungseinrichtung (56), welche dazu eingerichtet ist,
im Abgasstrom (54) enthaltenes CO₂ zumindest teilweise aus dem Abgasstrom (54) zu entfernen und - zur Wiederverwendung in der CO₂-Schnee-Strahldüse (22) - der CO₂-Zuführeinrichtung (24) zuzuführen
und
einen durch das teilweise Entfernen des CO₂s aus dem Abgasstrom erhaltenen Restabgasstrom (60) - zur Wiederverwendung als Beschleunigungsgas (50) in der CO₂-Schnee-Strahldüse (22) - der Beschleunigungsgas-Zuführeinrichtung (26), insbesondere komprimiert, zuzuführen.

2. Reinigungsanlage (10) nach Anspruch 1, wobei die Abgas-Aufbereitungseinrichtung (56) dazu ausgebildet ist, zum Entfernen des CO₂s aus dem Abgasstrom (54), den Abgasstrom (54) zu verdichten und anschließend derart abzukühlen, dass zumindest eine Teilmenge des in dem Abgasstrom (54) enthaltenen CO2s verflüssigt wird.

3. Reinigungsanlage (10) nach Anspruch 1 oder 2, wobei die Abgas-Aufbereitungseinrichtung (56) dazu eingerichtet ist, CO₂ derart aus dem Abgasstrom (54) zu entfernen, dass ein CO₂-Anteil im Restabgasstrom (60) noch mindestens 5%, vorzugsweise mindestens 10%, des CO₂-Anteils im Abgasstrom (54) beträgt.

4. Reinigungsanlage (10) nach einem der vorherigen Ansprüche, wobei die Abgas-Aufbereitungseinrichtung (56) zur Vorkühlung des Abgasstroms (56) vor dem Entfernen des CO₂s und zur Vorwärmung des Restabgasstroms (60) vor dem Zuführen zu der Beschleunigungsgas-Zuführeinrichtung (26) eine Wärmetauschereinrichtung (80) aufweist, um Wärmeenergie zwischen dem Abgasstrom (54) und dem Restabgasstrom (60) auszutauschen.

5. Reinigungsanlage (10) nach einem der vorherigen Ansprüche, wobei die Abgas-Aufbereitungseinrichtung (56) eine Verdichtereinrichtung (66) aufweist, welche dazu ausgebildet ist, den Abgasstrom (54) vor dem Entfernen des CO₂s zu verdichten, insbesondere sodass ein die Verdichtereinrichtung (66) verlassender verdichteter Abgasstrom (54) einen Druck zwischen 10 und 65 bar, vorzugsweise zwischen 10 und 40 bar, weiter vorzugsweise zwischen 15 und 35 bar, weiter vorzugsweise zwischen 20 und 30 bar, aufweist.

6. Reinigungsanlage (10) nach dem vorherigen Anspruch, wobei die Abgas-Aufbereitungseinrichtung (56) eine Kühleinrichtung (82) aufweist, welche dazu ausgebildet ist, den die Verdichtereinrichtung (66) verlassenden verdichteten Abgasstrom (54) derart abzukühlen, dass zumindest eine Teilmenge des in dem Abgasstrom (54) enthaltenen CO₂s verflüssigt wird,
insbesondere sodass ein die Kühleinrichtung (82) verlassender Abgaskühlstrom 84 ein Gemisch aus Beschleunigungsgas, nicht-verflüssigtem Rest-CO₂-Gas, und flüssigem CO₂ umfasst.

7. Reinigungsanlage nach Anspruch 2 oder Anspruch 6, wobei die Abgas-Aufbereitungseinrichtung (56) eine, insbesondere stromabwärts der Kühleinrichtung (82) angeordnete, CO₂-Abtrenneinrichtung (96) zur Abtrennung des flüssigen CO₂s aufweist, insbesondere wobei ein die CO₂-Abtrenneinrichtung verlassender Flüssig-CO₂-Strom (58) der CO₂-Zuführeinrichtung (24) zugeführt wird.

8. Reinigungsanlage (10) nach einem der Ansprüche 6 oder 7, wobei die Abgas-Aufbereitungseinrichtung (56) in einem Strömungsweg zwischen Verdichtereinrichtung (66) und Kühleinrichtung (82), insbesondere zwischen Verdichtereinrichtung (66) und Wärmetauschereinrichtung (80), eine Gastrocknungseinrichtung (76), vorzugsweise Adsorptionstrockner, zur Reduktion des Drucktaupunkts aufweist.

9. Reinigungsanlage (10) nach einem der Ansprüche 5 bis 8, wobei die Abgas-Aufbereitungseinrichtung (56) stromabwärts der Verdichtereinrichtung (66), insbesondere in einem Strömungsweg zwischen Verdichtereinrichtung (66) und Kühleinrichtung (82), weiter insbesondere in einem Strömungsweg zwischen Verdichtereinrichtung (66) und Wärmetauschereinrichtung (80), eine Abzweigeeinrichtung (78) aufweist, um bedarfsweise einen Teilstrom des verdichteten Abgasstroms (54) der Beschleunigungsgas-Zuführeinrichtung (26) zuzuführen.

10. Reinigungsanlage (10) nach einem der vorherigen Ansprüche, wobei die Abgas-Aufbereitungseinrichtung (56) außerdem umfasst:
- eine, insbesondere stromaufwärts zu der Verdichtereinrichtung (66) angeordnete, Absaugeinrichtung (62) zum Absaugen des Abgasstroms (54) aus der Reinigungskammer (16) aufweist und/oder
- eine, insbesondere stromaufwärts der Verdichtereinrichtung (66), weiter insbesondere stromaufwärts der Absaugeinrichtung (62), vorgesehene, Filtereinrichtung (64) zur Abscheidung von optional in dem Abgasstrom (54) vorhandenen Schmutzpartikeln.

11. Verfahren zum Reinigen einer Oberfläche eines Gegenstands (12) mittels eines CO₂-Schnee-Strahls (14), insbesondere mittels einer Reinigungsanlage (10) nach einem der vorherigen Ansprüche, umfassend
- Erzeugen eines CO₂-Schnee-Strahls (14) aus flüssigem CO₂ und Beschleunigungsgas mittels einer CO₂-Schnee-Strahldüse (22), umfassend das Versorgen der CO₂-Schnee-Strahldüse (22) mit flüssigem CO₂ über eine CO₂-Zuführeinrichtung (24) und das Versorgen der CO₂-Schnee-Strahldüse (22) mit Beschleunigungsgas über eine Beschleunigungsgas-Zuführeinrichtung (26);
- Beaufschlagen und somit Reinigen der Oberfläche des Gegenstands (12) mit dem CO₂-Schnee-Strahl (14);
- Abführen, insbesondere Absaugen, eines im Zuge der Reinigung entstehenden Abgasstroms, umfassend Beschleunigungsgas, CO₂, und optional abgereinigte Partikel;
- Zumindest teilweises Entfernen des CO₂s aus dem Abgasstrom (54) unter Erhalt eines Flüssig-CO₂-Stroms und eines Restabgasstroms (60);
- Zuführen des Flüssig-CO₂-Stroms zu der CO₂-Zuführeinrichtung (24) zur Wiederverwendung in der CO₂-Schnee-Strahldüse (22);
- Zuführen des Restabgasstroms zu der Beschleunigungsgas-Zuführeinrichtung (26) zur Wiederverwendung als Beschleunigungsgas in der CO₂-Schnee-Strahldüse (22).

12. Verfahren nach dem vorherigen Anspruch, wobei das zumindest teilweise Entfernen des CO₂ aus dem Abgasstrom das Verflüssigen des CO₂s durch Verdichten des Abgasstroms (54) und anschließendes Abkühlen des verdichteten Abgasstroms (54) umfasst.

13. Verfahren nach einem der Ansprüche 11 oder 12, wobei der Abgasstrom (54), insbesondere nach dem Verdichten und vor dem Abkühlen, einer Wärmetauschereinrichtung (80) zum Wärmeaustausch zwischen dem Abgasstrom (54) und dem Restabgasstrom (60) zugeführt wird.

14. Verfahren nach einem der Ansprüche 11 bis 13, wobei der Abgasstrom (54) nach dem Verdichten und vor dem Abkühlen in einer Gastrocknungseinrichtung (76) getrocknet wird.
